Europäisches Patentamt

European Patent Office

Office européen des brevets

(11) Publication number: **0 058 666**
**B1**

(12) **EUROPEAN PATENT SPECIFICATION**

(45) Date of publication of patent specification: **24.06.87**

(21) Application number: **81901174.3**

(22) Date of filing: **02.09.80**

(86) International application number:
**PCT/US80/01126**

(87) International publication number:
**WO 82/00867 18.03.82 Gazette 82/08**

(51) Int. Cl.⁴: **F 16 H 37/06,** F 16 H 37/08,
F 16 H 47/04

(54) **PLANETARY STEERING DIFFERENTIAL.**

(43) Date of publication of application:
**01.09.82 Bulletin 82/35**

(45) Publication of the grant of the patent:
**24.06.87 Bulletin 87/26**

(84) Designated Contracting States:
**DE FR GB**

(56) References cited:
**EP-A-0 004 427**
**EP-A-0 014 122**
**US-A-3 199 376**
**US-A-3 373 636**
**US-A-3 383 953**
**US-A-3 392 602**
**US-A-3 439 559**
**US-A-3 503 278**
**US-A-3 545 303**
**US-A-3 583 256**
**US-A-3 590 658**
**US-A-3 596 535**
**US-A-3 815 698**
**US-A-4 215 755**
**US-A-4 258 585**

(73) Proprietor: **CATERPILLAR INC.**
**100 Northeast Adams Street**
**Peoria Illinois 61629-6490 (US)**

(72) Inventor: **RIEDIGER, Craig W.**
**40 Northern Oaks, R.R.1**
**Pekin, IL 61554 (US)**
Inventor: **WINZELER, James E.**
**221 Coventry Lane**
**East Peoria, IL 61611 (US)**

(74) Representative: **Skone James, Robert Edmund**
**et al**
**GILL JENNINGS & EVERY 53-64 Chancery Lane**
**London WC2A 1HN (GB)**

(56) References cited:
**INGENIEURS L'AUTOMOBILE, no. 1, January**
**1979, pages 28-35 M.P. LEBOIME: "Techniques**
**des transmissions des véhicules chenillés**
**rapides"**

## Description

This invention relates generally to a differential for a vehicle cross drive or the like, and more particularly to a compact and simplified planetary steering differential.

A large number of earthmoving tractors have been developed which have incorporated either clutch-and-brake steering mechanisms or geared steering mechanisms. In both of these classifications, however, the drive to the opposite tracks is discontinuous when making turns. This results in poorer operation of the vehicle than is desired during turns in marginal ground conditions.

In some seasons of the year, for example, logging industry tractors with conventional clutch-and-brake steering mechanisms cannot be maneuvered to provide useful work because when one of the steering clutches is disengaged the power to that side of the tractor is interrupted. The other side of the tractor then has to pull the total drawbar load to maintain momentum. Unfortunately, soil strength under only one side is often inadequate to carry the total load so the powered track shears the soil and loses traction. Such a loss is a particular disadvantage when it comes to making relatively small steering corrections. On the other hand, clutch-and-brake steering mechanisms are widely used because they perform well in straight-ahead work applications and are simple in construction.

In geared steering mechanisms, rather than disconnecting one track and/or bringing that track to rest, one track is driven at a lower speed than the other by having additional gear sets in the drive to each track. But these mechanisms are complex and costly in construction because duplicate planetary sets, gears, brakes and/or clutches are typically provided at both sides. Furthermore, since these mechanisms are discontinuous a lower mean track speed is provided during a turn.

Another major group of steering mechanisms includes differential mechanisms in which drive is transmitted continuously to both tracks. The simplest form thereof is a braked differential, but these are rarely used because of relatively large power losses at the steering brake. Many of the disadvantages of the braked differential are obviated by controlled differentials. In such mechanisms engine power is not wasted in the steering brakes since power is merely transferred from the inner track to the outer track. But these also have disadvantages. One major disadvantage is that when the brakes are off these mechanisms act as simple differentials so that they depend on the reaction between the track and the ground to be equal for straight-ahead operation. Since this is often not true the vehicle tends to drift so that frequent corrections are required. Moreover, if one track loses traction the drive to the opposite track is reduced.

A good many of the above mentioned problems can be overcome by the use of double differentials, triple differentials and equivalent mechanisms which usually can counter rotate the opposite output members for spot turns. Typically, two differentials or their equivalent are arranged in parallel with their output shafts interconnected by gearing. Usually, a main drive power path is provided to one of the differentials and a steering drive power path is provided to the other one of the differentials. In some instances the steering input shaft has been driven by a hydrostatic pump and motor system, with the ability to hold the steering input shaft stationary to prevent differential action and to assure straight ahead operation of the tractor, military tank or the like in an effective manner. One major deficiency thereof is that dual cross shafts and associated gearing are required so that the construction is not only complex and costly, but also an unnecessarily large housing is required for containment of the components. Another related deficiency is that most of these differential mechanisms have a dual power path steering input, which usually involves rotating one gear at one side of the cross drive at the same speed but in the opposite direction to a counterpart gear on the other side.

US—A—3,373,636 describes a single input, dual output vehicle power train having an input driven hydrostatic unit controlling a differential gear unit which is cooperable with a multiple speed ratio gear unit to provide single and dual input drive to a pair of output differential gear units for straight vehicle drive and to provide single and dual input differential drive to the output differential gear units for steering.

Thus, what is desired is a compact steering differential having continuous drive capability to the opposite output members, a relatively simple construction arranged along a single axis, a single steering input power path, and preferably a built-in reduction or speed step-down capability for better matching the transmission input speed without the need for an additional drive train.

The present invention is directed to overcoming one or more of the problems as set forth above.

In accordance with the present invention, a planetary steering differential comprises a planetary means including first, second and third interconnected planetary mechanisms individually having first, second and third planetary elements, a first input member being provided by one or two of the planetary elements of the second and third planetary mechanisms, a second input member being provided by another one or two of the elements of the second and third planetary mechanisms and one of the planetary elements of the first planetary mechanism being a stationary reaction member, wherein two output elements of the planetary means are connected to first and second output members respectively, the arrangement being such that when the first input member of the planetary means is rotated the two output elements rotate at the same speed and in the same direction when the second input member is held stationary, and at different speeds when the second input member is also rotated.

When the input members of the instant differential are powerably driven at the same time by suitable transmission means and steering means respectively, the average speed of the output members is proportional to the speed of the transmission means, and the difference in the speed of the output members is proportional to the speed of the motor means.

Preferably, the planetary mechanisms are arranged along a common axis.

Advantageously, transmission means are provided for rotating the first input member and thereby an output element of each of the first and third planetary mechanisms at equal rates of speed for straight-ahead vehicle operation in response to holding the second input element, and steering means are provided solely through a single input power path for rotating the second input member and thereby the same output elements at different rates of speed for turning vehicle operation.

Basically, a family of three interconnected planetary mechanisms is presented wherein one (or two) planetary element(s) is (are) powerably driven by a transmission and one (or two) other planetary element(s) is (are) powerably driven by a variable speed and reversible steering motor. Operation of the steering motor in one direction of rotation causes the speed of the left output member to increase and the right output member to simultaneously decrease the same amount for a right turn, while rotation in the opposite direction causes an opposite reaction for a left turn. The first planetary mechanism in each embodiment in the family has a grounded or stationary planetary element and is provided for speed control. This greatly simplifies the construction of the differential, beneficially provides continuous power to the opposite sides of a vehicle during a turn, and allows straight-ahead operation without drift. It is especially valuable in a vehicle requiring either frequent small steering corrections or repetitive spot steering type operation under adverse footing conditions.

Some examples of planetary steering differentials according to the invention will now be described with reference to the accompanying drawings, in which:—

Fig. 1 is a diagrammatic, elevational view of a generalised planetary schematic of one embodiment of a planetary steering differential, showing in block form a hydraulic steering motor input and a separate transmission unit associated with the planetary input members thereof and illustrating the general power path associated with these units;

Fig. 2 is a diagrammatic, right end elevational view of the third planetary mechanism of the instant planetary steering differential as taken along the line II—II of Fig. 1, and illustrating the direction of rotation of the elements during a straight-ahead mode of operation;

Fig. 3 is a view similar to Fig. 2 taken along line III—III of Fig. 1 and showing the second planetary mechanism thereof;

Fig. 4 is a view similar to Figs. 2 and 3 taken along line IV—IV of Fig. 1 and illustrating the first planetary mechanism thereof;

Fig. 5 is a view similar to Fig. 2, only illustrating the direction of rotation and relative speed of the elements during a steering correction;

Fig. 6 is a view similar to Fig. 3, with the elements making the same steering correction as Fig. 5;

Fig. 7 is a view similar to Fig. 4, with the elements making the same steering correction as Figs. 5 and 6;

Fig. 8 is a diagrammatic, elevational sectional view of a planetary steering differential embodying the planetary configuration of Fig. 1, showing in more detail the components thereof as they can be assembled in a vehicle while looking forward from the rear end of the vehicle;

Fig. 9 is a view similar to Fig. 8, embodying the planetary configuration of Fig. 1 but showing a first alternative embodiment assembly of the planetary elements on a vehicle;

Fig. 10 is a view similar to Fig. 1 of a second alternate embodiment planetary steering differential;

Fig. 11 is a view similar to Figs. 1 and 10, only illustrating a third alternate embodiment;

Fig. 12 shows a fourth alternate embodiment of the planetary steering differential; and

Fig. 13 illustrates a fifth alternate embodiment.

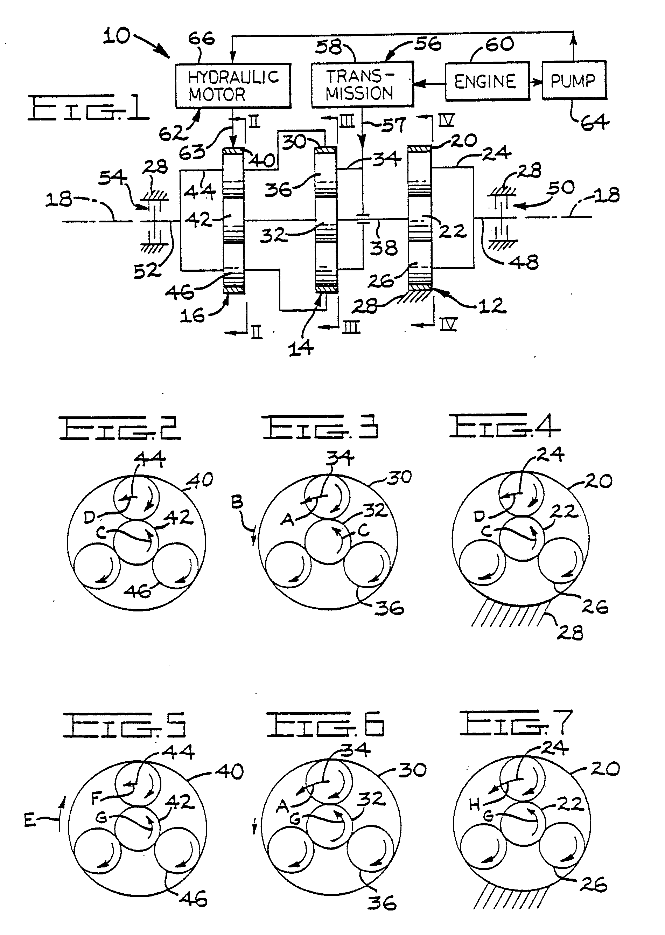

Referring initially to the diagrammatic drawing of Fig. 1, a planetary steering differential 10 is shown in simplified block-like form which has first, second and third interconnected planetary mechanisms 12, 14 and 16 respectively aligned along a central vehicle cross drive axis 18 oriented normal to the usual forward and reverse direction of vehicle travel.

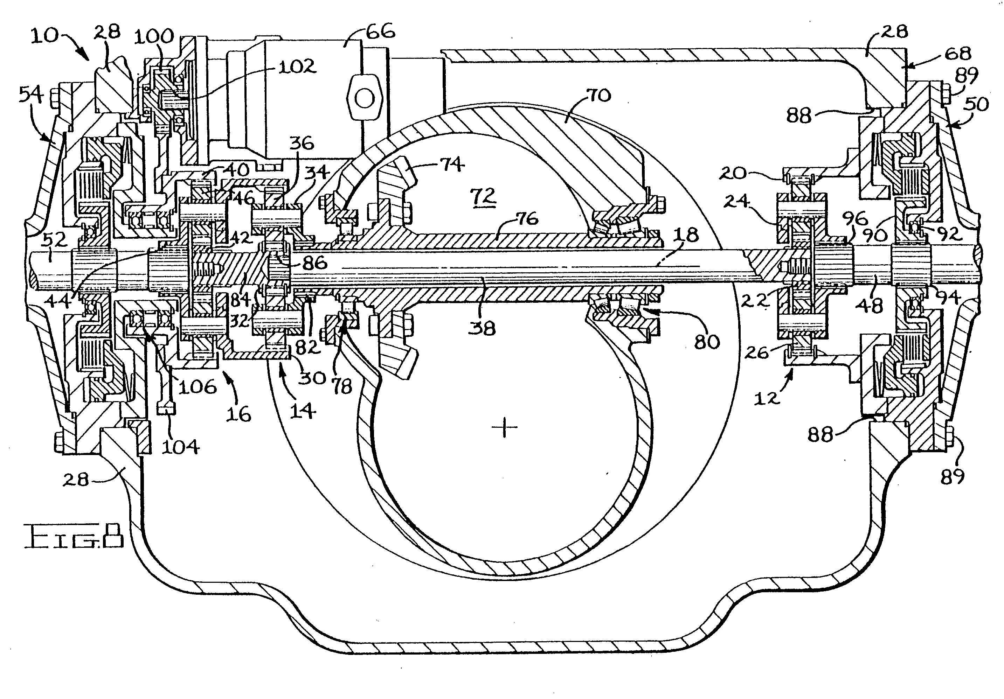

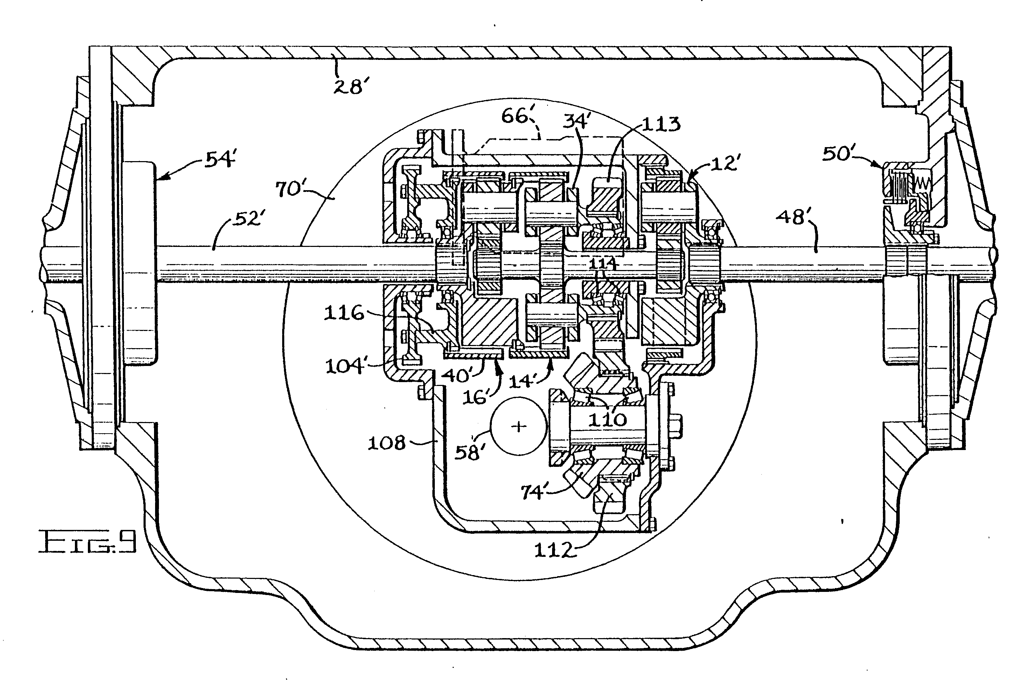

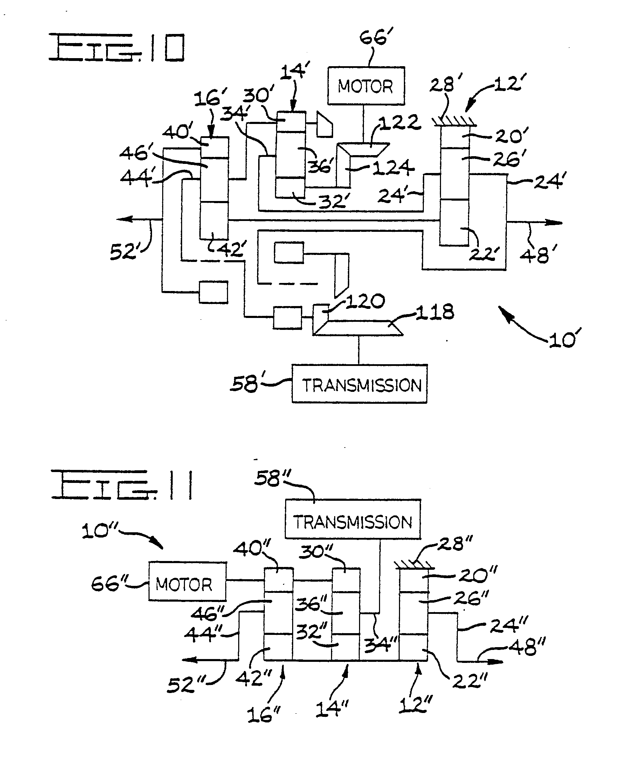

The first planetary mechanism 12 includes ring gear, sun gear and planet carrier elements 20, 22 and 24 of the typical type wherein a plurality of similar planet elements 26 are rotatably mounted on the carrier element and are in intermeshing toothed engagement with the ring and sun elements. In the instant embodiment the first planetary mechanism serves as a grounded member train with the ring element being fixedly secured to a differential housing 28, and provides a speed reduction. An end view of the first planetary mechanism, looking from the right side of Fig. 1, is illustrated in Fig. 4.

The second planetary mechanism 14 includes ring gear, sun gear and planet carrier elements 30, 32, 34 and a plurality of planet elements 36 are rotatably mounted on the carrier element. As is illustrated in Fig. 1, the second sun element 32 is directly connected to first sun element 22 by a shaft 38. A diagrammatic end view of the second planetary mechanism is illustrated in Fig. 3.

Similarly, at the left side when viewing Fig. 1 is the third planetary mechanism 16 including ring gear, sun gear and planet carrier elements 40, 42 and 44, and a plurality of planet elements 46 on the carrier element. An end view thereof is shown in Fig. 2. The third planet carrier element 44 is connected for joint rotation with the second ring element 30, as is also the third sun element 42 with the second sun element 32.

The first carrier element 24 on the right side when viewing Fig. 1 serves essentially as the first output member 48, and a conventional service brake assembly 50 can be associated therewith to selectively brake the right side of the vehicle. On the left side the third carrier element 44 serves as the second output member 52 and a similar conventional service brake assembly 54 can selectively connect that element or output member to the differential housing 28 to brake the left side.

Transmission means 56 is desirably provided for powerably rotating one or two elements of the second and third planetary mechanism 14, 16 via a single reversible power path or first input member 57. Preferably the transmission means includes a conventional multi or variable speed and reversible transmission 58 driven by an engine 60 as is illustrated in Fig. 1. In the instant example, the transmission is essentially connected to the second carrier element 34 so that that element serves as the primary or first input.

Advantageously, infinitely variable ratio steering means 62 is provided for powerably rotating one or two other elements of the second and third planetary mechanisms 14, 16 via a single reversible power path or second input member 63. Preferably, such means includes a hydraulic or hydrostatic pump 64 driven by the engine 60, and a corresponding motor 66 which is in fluid communication with the pump and driven by the pump. In the instant example the hydraulic motor 66 is essentially connected to the third ring element 40 which thereby serves as the secondary input to the steering differential 10.

Referring now to Fig. 8, a diagrammatic cross sectional elevation view of one form of the planetary differential 10 described in Fig. 1 is shown installed in a vehicle 68 and looking from the rear of the vehicle. Centrally thereof is a transmission case 70 releasably secured within the differential housing 28, and defining a central chamber 72 in which the multi-speed transmission 58 is contained. Although the conventional transmission is not shown, the output thereof drives a bevel gear 74 releasably secured to a hollow cross shaft 76. The cross shaft is rotatably supported within the transmission case by first and second bearing assemblies 78 and 80, and extends outwardly from the left side of the case when viewing the drawing to provide a spline connection 82 thereat. This spline connection couples the hollow shaft to the second carrier element 34 of the second planetary mechanism 14 to provide the primary input to the differential.

More specifically, the second sun element 32 has an extended body portion 84 defining an internal spline 86, and the center shaft 38 is coupled to the spline and extends rightwardly within the hollow cross shaft 76 to provide the drive to the first planetary mechanism 12. The sun element 22 is shown as being integral with the center shaft. The first ring element 20 is connected to the service brake assembly 50, and this assembly is releasably connected to the differential housing 28 at a cylindrical opening 88 by a plurality of fasteners or bolts 89. In turn, the right side service brake assembly rotatably supports an annular hub 90 by a bearing assembly 92, and the hub supports the right output member or axle shaft 48 at a releasable spline connection 94. Since the right axle shaft is also releasably connected to the first carrier element 24 at a spline connection 96 it may be withdrawn to the right for servicing independently of the service brake assembly. Advantageously, the entire service brake assembly 50, the hub 90 and the first planetary mechanism 12 can be removed for servicing substantially as a modular unit by screwthreaded release of the bolts 89. The shaft 38 can be removed rightwardly through the opening 88.

The left side service brake assembly 54 has substantially the same construction and convenient serviceability features as the right side. In addition, after the cross shaft 38 is released from the right side via the opening 88, and after the left axle shaft 52 and the second planetary mechanism 14 are moved to the left, the transmission case 70 and transmission 58 contained therein can be withdrawn rearwardly as a unit from within the differential housing 28 through a rearwardly facing opening in the rear wall thereof, not shown.

The bidirectional, variable speed hydraulic motor 66 can be serviced from the top of the differential housing 28. It can be removed independently of an output gear 100 because of a releasable spline connection 102 therebetween. The output gear 100 is in toothed engagement with a larger gear 104 connected to the third ring element 40 and rotatably supported on the service brake assembly 54 by a bearing assembly 106.

Alternate Embodiment

While the construction illustrated in Fig. 8 is very desirable as described above, it is also possible to rearrange the components of the steering differential 10 in a central location so that the transmission 58' and all three of the planetary mechanisms 12', 14', and 16' can be removed as a modular unit as may be visualised with reference to Fig. 9. In Fig. 9 elements common to Figs. 1 and 8 have been shown with similar reference numbers with an added prime indicator for convenient identification. In the alternate embodiment the transmission case 70' is releasably connected to a reduced size differential case 108, and the differential case nestably contains the three planetary mechanisms 12', 14' and 16' and rotatably supports the input bevel gear 74' through an opposed pair of roller bearings 110. A first transfer gear 112 is connected to the input bevel gear for joint rotation and is in driving contact with a second transfer gear 113. The second transfer gear is connected to the second carrier element 34' and is essentially rotatably supported within the differential case 108 as by a second opposed pair of roller bearings 114, and it is this second transfer gear that provides the primary input to the second planetary mechanism 14'. The motor 66' illustrated in broken outline drives the gear 104' to provide the steering input to the third ring element 40' through an intermediate member 116.

In the Fig. 9 construction it is only necessary to withdraw the left and right axle shafts 52', 48' to the left and right respectively in order to subsequently permit the differential case 108 and transmission case 70' to be withdrawn through the rear of the differential housing 28'.

Industrial Applicability

In operation, the planetary steering differential 10 is preferably situated at the rear portion of the vehicle 68 such as an earthmoving tractor in order to place the transverse axis 18 thereof substantially in line with, or near, the axis of the sprockets that drive the left and right endless tracks. Although these latter members are not illustrated in the drawings, it can be appreciated by reference to Fig. 1 that if the left and right output members 52, 48 are rotated in the same direction and at the same speed then the vehicle will travel straight-ahead or in reverse in a longitudinal direction. Either mode of operation is achieved by selecting the gear speed and direction of the output of the transmission 58 so that the second carrier element 34 is driven in the desired manner. Simultaneously, the hydraulic motor 66 is selectively positioned in a holding mode of operation to hold the third ring element 40 stationary and to assure that both output members 48, 52 will rotate at the same speeds without drift.

Specifically, and with reference to Fig. 3, the second planet carrier element 34 can be rotated in a counterclockwise direction when viewing along the axis 18 from the right side in Fig. 1 by the transmission 58 as is indicated by the letter A. By establishing the number of teeth in the rotating elements of the first, second and third planetary mechanisms 12, 14 and 16 at preselected values certain advantages will accrue. This can best be appreciated by selectively establishing the ratio of the number of teeth of the ring gear element divided by the number of teeth of the sun gear element, hereinafter called the e value, such that the e value of the second planetary mechanism 14 minus 1 is equal to the e value of both the first and third planetary mechanisms 12 and 16. For example, the number of teeth in the first planetary mechanism ring and sun elements 20, 22 respectively can be 81 and 27, which results in an e value of 3. The number of teeth in the secondary planetary mechanism ring and sun elements 30, 32 can be 80 and 210, which results in an e value of 4. And the number of teeth in the third planetary mechanism ring and sun elements 40, 42 can be 81 and 27, which provides an e value of 3.

With the aforementioned 3—4—3 e value relationship, and the planetary mechanisms 12, 14 and 16 interconnected as previously described, the ring element 30 will be forced to rotate in a counterclockwise direction as indicated by the letter B in Fig. 3, but at about 5/8 of the speed rate of the input. Also, the interconnected sun elements 22, 32, 42 will rotate together in a counterclockwise direction at 2 1/2 times the speed rate of the input as is indicated by the letters C in Figs. 4, 3 and 2 respectively. The first carrier output element 24 and the third carrier output element 44 will then rotate in a counterclockwise direction at a rate 5/8 of the input speed as indicated by the letters D in Figs. 4 and 2. Note that both the first and third ring elements 20, 40 are held to achieve this straight-ahead mode of operation.

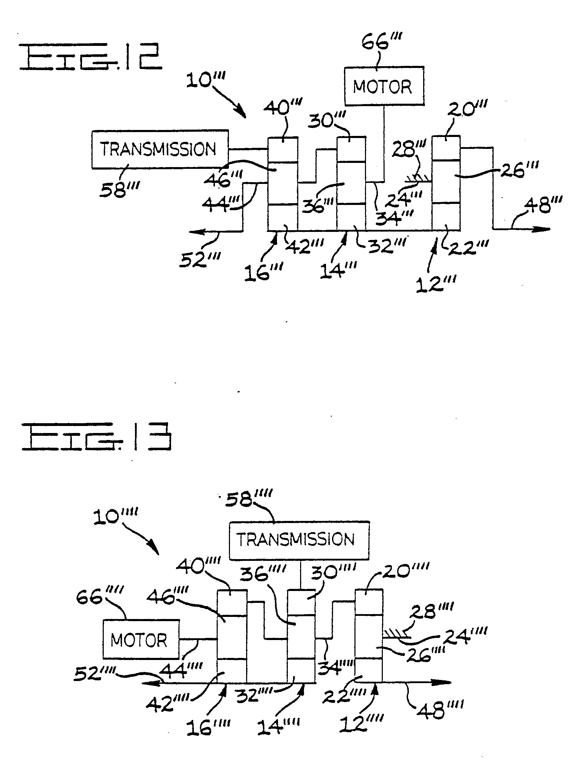

If a steering correction is desired while travelling, the engine driven pump 64 is selectively coupled to the hydraulic motor 66 to drive it in either direction of rotation simultaneously with rotation of the second carrier element 34 by the transmission 58. Assuming that a turn to the left is desired while traveling forward, then the motor will be powered to drive the third ring element 40 in a clockwise direction as is illustrated by the letter E in Fig. 5. This causes a reaction on the planet gear elements 46 such that the speed of the third carrier element 44 is reduced as indicated by the letter F. On the other hand the sun elements 42, 32 and 22 experience a speed increase as indicated by the letter G in Figs. 5, 6 and 7 with the result that the first carrier element 24 is forced to speed up as indicated by the letter H. Since the speed of the left output member or drive axle 52 decreases and the right output member or drive axle 48 increases a steering correction to the left results.

By reversing the direction of rotation of the hydraulic motor 66 a steering correction to the right can be made. Advantageously, power is continuously supplied to both sides of the vehicle 68 throughout a turn with the planetary steering differential 10, and the average speed of the opposite output members 48, 52 remains unchanged and equal to a preselected proportion of the output speed of transmission 58.

In any mode of operation, the service brake assemblies 50, 54 can be operated together to brake the vehicle. Such operation is desirably independent of the steering function.

In order for the vehicle 68 to make a spot turn the transmission 58 is selectively controlled to hold the second carrier element 34 stationary. Then the motor can be operated in either direction to force the first and third carrier elements 24 and 44 to rotate in opposite directions at the same speed. Under these conditions the demands on the hydraulic motor can be expected to reach a maximum horsepower rating. However, with the subject differential 10 the size or capacity of the motor need not be equal to the full horsepower rating of the engine 60, but rather only a preselected portion thereof. For example, a motor horsepower rating of about 60% that of the engine is considered practical in one instance.

It is to be appreciated that the motor speed can be selectively controlled within limits to be large enough relative to the transmission input speed to cause any desired speed ratio of the opposite output members to give desired steering correction. Moreover, the output members can even be counterrotated when the transmission input member 57 is being rotated at a preselected speed for a more rapid steering correction.

The differential 10 of Fig. 1 also provides a desirable speed reduction of about 1.6, which can be considered in the range of a moderate reduction level. A greater level of speed reduction, for example a reduction level of about 3.0, can be advantageous in some cases because it could mean that less speed reduction would be required within the final drives and result in a savings in construction complexity and space requirements thereat.

Second Alternate Embodiment

As shown in Fig. 10, a second alternate embodiment planetary steering differential 10′ includes first, second and third interconnected planetary mechanisms 12′, 14′ and 16′ respectively, so that it bears a family resemblance to the embodiment of Fig. 1. Each of the first, second and third planetary mechanisms have ring, sun, carrier and planet elements identified by reference numerals similar to those employed during the description of the first embodiment, only with the addition of a prime indicator. However, the connections are different and the e values are different to provide certain advantages. The first planet carrier element 24′ is connected for joint rotation with the second planet carrier element 34′, the first sun gear element 22′ is connected to the third sun gear element 42′ for joint rotation, and the second ring gear element 30′ is connected for joint rotation with the third planet carrier element 44′.

Both the transmission 58′ and the motor 66′ are connected to the same planetary mechanism 14′ via pinion gears and bevel gears 118, 120 and 122, 124 respectively, and with the bevel gears 120 and 124 being respectively connected for joint rotation with the second ring element 30′ and the second sun element 32′. This construction can have certain advantages by better accommodating the differential 10′ and particularly the location of the transmission and motor input elements 118, 122 to the space requirements of the vehicle. Moreover, the first carrier element 24′ provides the right power output and the third ring element 40′ provides the left power output, and this is preferred generally over a sun gear power output. The respective e values for the first, second and third planetary mechanisms 12′, 14′, 16′ can be 2, 2 and 3 to provide gearing elements of a desirable size and a speed reduction at the output elements 24′, 40′ of about 1.5:1 with respect to the input element 30′.

Third Alternate Embodiment

A third alternate embodiment planetary steering differential 10″ is shown in Fig. 11 having elements similar to those employed above identified with similar reference numerals, only with the addition of double prime indicators. In this construction the three sun gear elements 22″, 32″ and 42″ are connected together for joint rotation, and the two ring gear elements 30″ and 40″ are connected together for joint rotation so that only two separate pieces need be manufactured to effect a considerable cost savings. Yet, the desirable carrier element output members are retained, and a desirable range of e values can be selected to provide the required ratios. For example, e values of 4, 2 and 4 can be chosen for the respective mechanisms 12″, 14″ and 16″ to provide a reduction level of 1.67:1 in the differential 10″.

Fourth Alternate Embodiment

A fourth alternate embodiment planetary steering differential 10‴ is shown in Fig. 12 which has the desirable feature of a increased speed reduction. In this instance the first planetary mechanism 12‴ has a different grounded element, namely the first planet carrier element 24‴ is continually grounded to the stationary housing 28‴ and the ring element 20‴ serves as the right output member. The sun gears 22‴, 32‴ and 42‴ are connected together for joint rotation, and the left output member is connected for joint rotation with the third planet carrier 44‴ and also the second ring gear element 30‴. The transmission 58‴ is coupled to the third ring gear element 40‴ in this construction, and the steering motor 66‴ is coupled to the second carrier element 34‴. With e values of 3, 3 and 2 for the first, second and third planetary mechanisms 12‴, 14‴ and 16‴ respectively, a relatively high speed reduction capability of 3.0:1 is effected. It also features manufacturing economies similar to those mentioned above with respect to Fig. 11.

Fifth Alternate Embodiment

Fig. 13 illustrates a fifth alternate embodiment planetary steering differential 10⁗ which features a negative overdrive.

The first carrier element 24⁗ is continually grounded to the housing 28⁗ and the right output is by way of the sun gear element 22⁗. The first ring element 20⁗, the second carrier element 34⁗ and the third ring element 40⁗ are connected together for joint rotation, and the second and third sun gear elements 32⁗ and 42⁗ are connected together to provide the left output. Transmission 58⁗ drives the second ring element 30⁗ and steering motor 66⁗ drives the third planet carrier element 44⁗. With the respective e values being 4, 3 and 4, a speed reduction of −0.67 can be effected. In other words, if the transmission drives the ring element 30⁗ at 1 rpm in a first direction of rotation with such construction then the output members 48⁗ and 52⁗ are driven at 1 1/2 rpm in a direction opposite to the first direction of rotation.

Thus it can be recognized that the planetary steering differentials 10, 10', 10'', 10''' and 10'''' present a family of differentials having a single transmission input power path and a particularly desirable single steering motor input power path to planetary means 12, 14, 16. This avoids the need for an additional cross shaft and the dual steering motor input power paths required of a great many of the prior art planetary steering differentials. Basically, three planetary mechanisms achieve rotation of the opposite output members in the same direction and at the same speed in response to holding the single steering input member and driving the transmission input member for straight ahead operation, or achieve rotation of the output members in opposite directions at the same speed in response to holding the transmission input member and driving the single steering input member for effecting a spot turn. This is accomplished in a compact and economical package, which package may be conveniently tailored in its speed reduction capability and construction to best match a particular vehicle's requirements.

## Claims

1. A planetary steering differential (10) comprising planetary means including first, second and third interconnected planetary mechanisms (12, 14, 16) individually having first, second and third planetary elements (20, 22, 24, 30, 32, 34, 40, 42, 44), a first input member being provided by one or two of the planetary elements (34; 34''; 40'''; 30''''; 46', 30') of the second and third planetary mechanisms (14, 16), a second input member being provided by another one or two of the elements (40; 32'; 34'''; 44''''; 40'', 30'') of the second and third planetary mechanisms (14, 16) and one of the planetary elements (20, 22, 24) of the first planetary mechanism being a stationary reaction member, wherein two output elements (24, 44) of the planetary means are connected to first and second output members (48, 52) respectively, the arrangements being such that when the first input member of the planetary means is rotated the two output elements (24, 44) rotate at the same speed and in the same direction when the second input member is held stationary, and at different speeds when the second input member is also rotated.

2. A differential according to claim 1, wherein the differential is connected to steering means (62) solely by the second input element.

3. A planetary steering differential (10) according to claim 1 or claim 2, wherein the planetary mechanisms (12, 14, 16) are arranged along a common axis (18).

4. A planetary steering differential (10) according to any of the preceding claims, wherein one of the planetary elements (30, 32, 34) of the second planetary mechanism (14) is connected to one of the planetary elements (40, 42, 44) of the third planetary mechanism (16) for joint rotation.

5. A planetary steering differential (10) according to any of the preceding claims, wherein sun gears of at least two of the planetary mechanisms are connected for joint rotation.

6. A planetary steering differential (10) according to any of the preceding claims, wherein the first input element is a planet carrier (34).

7. A planetary steering differential (10) according to claim 6, wherein the second input element is a ring gear (40).

8. A planetary steering differential (10) according to any of the preceding claims, wherein the output elements are provided by planet carriers (24, 44) of the first and third planetary mechanisms (12, 16).

9. A planetary steering differential (10) according to any of claims 1 to 5, wherein the first input member is a ring gear (30', 30'''').

10. A planetary steering differential (10) according to claim 9, wherein the second input element is a sun gear (32').

11. A planetary steering differential (10) according to claim 9, wherein the second input element is a planet carrier (34''').

12. A planetary steering differential (10) according to claim 10 or claim 11, wherein the output elements are provided by a planet carrier and a ring gear of the first and third planetary mechanisms (12, 16).

13. A planetary steering differential (10) according to claim 11, wherein the output elements are provided by sun gears of the first and third planetary mechanisms (12, 16).

14. A planetary steering differential (10) according to any of the preceding claims, wherein when the first input element (34) is held stationary, rotation of the second input element (40) causes the output elements (24, 44) to rotate at the same speed in different directions.

15. A vehicle having a planetary steering differential (10) according to claim 1, transmission means (56) connected to the first input element (34); and steering means (62) connected to the second input element (40) the steering means providing the sole steering input power path to the planetary means (12, 14, 15).

## Patentansprüche

1. Lenkungs-Planetendifferentialgetriebe (10), wobei folgendes vorgesehen ist: Planetenmittel einschließlich erster, zweiter und dritter miteinander verbundener Planetenmechanismen (12, 14, 16), die einzeln erste, zweite und dritte Planetenelemente (20, 22, 24, 30, 32, 34, 40, 42, 44) aufweisen, ein erstes Eingangsglied, vorgesehen durch eines oder zwei der Planetenelemente (34; 34''; 40'''; 30''''; 46', 30') der zweiten und dritten Planetenmechanismen (14, 16), ein zweites Eingangsglied, vorgesehen durch ein oder zwei weitere der Elemente (40; 32'; 34'''; 44''''; 40'', 30'') der zweiten und dritten Planetenmechanismen (14, 16), und wobei eines der Planetenelemente (20, 22, 24) des ersten Planetenmechanismus ein stationäres Reaktionsglied ist, wobei zwei Ausgangselemente (24, 44) der Planetenmittel mit dem ersten bzw. zweiten Ausgangsglied (48, 52) verbunden sind, und wobei die Anordnung derart getroffen ist, daß dann, wenn das erste Eingangsglied der Planetenmittel gedreht wird, die zwei Ausgangselemente (24, 44) mit der gleichen Drehzahl und in der gleichen Richtung rotieren, wenn das zweite Eingangsglied stationär gehalten wird und mit unterschiedlichen Drehzalen dann, wenn das zweite Eingangsglied ebenfalls gedreht wird.

2. Differential nach Anspruch 1, wobei das Differential mit Lenkmitteln (62) allein durch das zweite Eingangselement verbunden ist.

3. Lenkungs-Planetendifferentialgetriebe (10) nach Anspruch 1 oder 2, wobei der Planetenmechanismus (12, 14, 16) längs einer gemeinsamen Achse (18) angeordnet ist.

4. Lenkungs-Planetendifferentialgetriebe (10) nach einem der vorhergehenden Ansprüche, wobei eines der Planetenelemente (30, 32, 34) des zweiten Planetenmechanismus (14) mit einem der Planetenelemente (40, 42, 44) des dritten Planetenmechanismus (16) für gemeinsame Drehung verbunden ist.

5. Lenkungs-Planetendifferentialgetriebe (10) nach einem der vorhergehenden Ansprüche, wobei die Sonnenräder von mindestens zwei der Planetenmechanismen für gemeinsame Drehung verbunden sind.

6. Lenkungs-Planetendifferentialgetriebe (10) nach einem der vorhergehenden Ansprüche, wobei das erste Eingangselement ein Planetenträger (34) ist.

7. Lenkungs-Planetendifferentialgetriebe (10) nach Anspruch 6, wobei das zweite Eingangselement ein Ringzahnrad (40) ist.

8. Lenkungs-Planetendifferentialgetriebe (10) nach einem der vorhergehenden Ansprüche, wobei die Ausgangselemente durch Planetenträger (24, 44) der ersten und dritten Planetenmechanismen (12, 16) vorgesehen sind.

9. Lenkungs-Planetendifferentialgetriebe (10) nach einem der Ansprüche 1—5, wobei das erste Eingangsglied ein Ringzahnrad (30′ 30′′′′) ist.

10. Lenkungs-Planetendifferentialgetriebe (10) nach Anspruch 9, wobei das zweite Eingangselement ein Sonnenzahnrad (32′) ist.

11. Lenkungs-Planetendifferentialgetriebe (10) nach Anspruch 9, wobei das zweite Eingangselement ein Planetenträger (34′′′) ist.

12. Lenkungs-Planetendifferentialgetriebe (10) nach Anspruch 10 oder 11, wobei die Ausgangselemente vorgesehen sind durch einen Planetenträger und ein Ringzahnrad der ersten und dritten Planetenmechanismen (12, 16).

13. Lenkungs-Planetendifferentialgetriebe (10) nach Anspruch 11, wobei die Ausgangselemente durch Sonnenzahnräder der ersten und dritten Planetenmechanismen (12, 16) vorgesehen sind.

14. Lenkungs-Planetendifferentialgetriebe (10) nach einem der vorhergehenden Ansprüche, wobei dann, wenn das erste Eingangselement (34) stationär gehalten ist, die Drehung des zweiten Eingangselements (40) bewirkt, daß die Ausgangselemente (24, 44) sich mit der gleichen Drehzahl in unterschiedlichen Richtungen drehen.

15. Fahrzeug mit einem Lenkungs-Planetendifferentialgetriebe (10) nach Anspruch 1, wobei Getriebemittel (56) mit dem ersten Eingangselement (34) verbunden sind, und wobei Lenkmittel (62) mit dem zweiten Eingangselement (40) in Verbindung stehen, und wobei die Lenkmittel den einzigen Lenkeingangsleistungspfad den Planetenmitteln (12, 14, 15) vorsehen.

## Revendications

1. Différentiel de direction planétaire (10) comportant des moyens planétaires qui comprennent des premier, second et troisième mécanismes planétaires interconnectés (12, 14, 16) pourvus chacun de premier, second et troisième éléments planétaires (20, 22, 24, 30, 32, 34, 40, 42, 44), un premier organe primaire étant constitué par un ou deux des éléments planétaires (34; 34′′; 40′′′; 30′′′′; 46′, 30′) des second et troisième mécanismes planétaires (14, 16), un second organe primaire étant constitué par un ou deux autres des éléments (40; 32′; 34′′′; 44′′′′; 40′′, 30′′) des second et troisième mécanismes planétaires (14, 16) et l'un des éléments planétaires (20, 22, 24) du premier mécanisme planétaire étant un organe de réaction fixe, dans lequel deux éléments secondaires (24, 44) des moyens planétaires sont reliés respectivement à des premier et second organes secondaires (48, 52), la disposition étant telle que, lorsque le premier organe primaire des moyens planétaires est animé d'un mouvement de rotation, les deux éléments secondaires (24, 44) tournent à la même vitesse et dans la même direction, si le second organe primaire est maintenu fixe, et à des vitesses différentes, si le second organe primaire et également animé d'un mouvement de rotation.

2. Différentiel selon la revendication 1, dans lequel le différentiel est relié à des moyens de direction (62) uniquement par le second élément primaire.

3. Différentiel de direction planétaire (10) selon la revendication 1 ou la revendication 2, dans lequel les mécanismes planétaires (12, 14, 16) sont disposés le long d'un axe commun (18).

4. Différentiel de direction planétaire (10) selon l'une quelconque des revendications précédentes, dans lequel l'un des éléments planétaires (30, 32, 34) du second mécanisme planétaire (14) est relié à l'un des éléments planétaires (40, 42, 44) du troisième mécanisme planétaire (16) en vue d'une rotation commune.

5. Différentiel de direction planétaire (10) selon l'une quelconque des revendications précédentes, dans lequel des pignons solaires de deux des mécanismes planétaires sont reliés en vue d'une rotation commune.

6. Différentiel de direction planétaire (10) selon l'une quelconque des revendications précédentes, dans lequel le premier élément primaire est une porte-satellites (34).

7. Différentiel de direction planétaire (10) selon la revendication 6, dans lequel le second élément primaire est une couronne (40).

8. Différentiel de direction planétaire (10) selon l'une quelconque des revendications précédentes, dans lequel les éléments secondaires sont constitués par des porte-satellites (24, 44) des premier et troisième mécanismes planétaires (12, 16).

9. Différentiel de direction planétaire (10) selon l'une quelconque des revendications 1 à 5, dans lequel le premier organe primaire est une couronne (30', 30'''').

10. Différentiel de direction planétaire (10) selon la revendication 9, dans lequel le second élément primaire est un pignon solaire (32').

11. Différentiel de direction planétaire (10) selon la revendication 9, dans lequel le second élément primaire est un porte-satellites (34''').

12. Différentiel de direction planétaire (10) selon la revendication 10 ou la revendication 11, dans lequel les éléments secondaires sont constitués par un porte-satellites et une couronne des premier et troisième mécanismes planétaires (12, 16).

13. Différentiel de direction planétaire (10) selon la revendication 11, dans lequel les éléments secondaires sont constitués par des pignons solaires des premier et troisième mécanismes planétaires (12, 16).

14. Différentiel de direction planétaire (10) selon l'une quelconque des revendications précédentes, dans lequel, lorsque le premier élément primaire (34) est maintenu fixe, une rotation du second élément primaire (40) entraîne la rotation des éléments secondaires (24, 44) à une vitesse indentique dans des directions différentes.

15. Véhicule comportant un différentiel de direction planétaire (10) selon la revendication 1, des moyens de transmission (56) reliés au premier élément primaire (34), et des moyens de direction (62) reliés au second élément primaire (40), les moyens de direction constituant le seul circuit de puissance d'entrée de direction vers les moyens planétaires (12, 14, 16).

FIG.1

FIG.2

FIG.3

FIG.4

FIG.5

FIG.6

FIG.7

FIG.8

Fig.9

FIG. 10

MOTOR 66'

FIG. 11

TRANSMISSION 58''

MOTOR 66''

TRANSMISSION 58'

FIG.12

10'''

66'''

MOTOR

TRANSMISSION

40''' 30''' 28''' 20'''

46''' 26'''

44''' 24''' 48'''

58''' 36''' 34'''

52''' 42''' 32''' 22'''

16''' 14''' 12'''

FIG.13

58''''

TRANSMISSION

10''''

66'''' 40'''' 36'''' 30'''' 20''''

46'''' 28''''

24''''

MOTOR 26''''

44'''' 34''''

52'''' 42'''' 32'''' 22'''' 48''''

16'''' 14'''' 12''''

5